# EUROPEAN PATENT APPLICATION

(11) **EP 3 372 425 A1**
(43) Date of publication of application: **12.09.2018**
(21) Application number: 17159622.4
(22) Date of filing: 07.03.2017
(51) Int. Cl.: B60G 9/00, B60P 1/04, B60P 1/28, B60G 11/27

(54) **A WORKING MACHINE**

(71) Applicant: Volvo Construction Equipment AB, 631 85 Eskilstuna (SE)
(72) Inventor: SOLENLID, Lena, 352 49 Växjö (SE); JOHANSSON, Peter, 352 64 Växjö (SE)
(74) Representative: Volvo Technology Corporation

(57) **Abstract**

The invention relates to a working machine for carrying a load. The working machine may be an autonomous, and electric or hybrid, working machine. The working machine comprises a dump body, a working machine frame, a first and second propulsion axle connected to the working machine frame towards opposite ends of the working machine frame, the first propulsion axle is arranged less than 15 % of the length of the working machine frame away from the attachment means, and the second propulsion axle is arranged less than 15 % of the length of the working machine frame away from the dump body receiving section.

## Description

### TECHNICAL FIELD

The invention relates to a working machine. The invention also relates to an autonomous, and electric or hybrid, working machine.

### BACKGROUND

In the field of construction equipment there are a number of different working machines used to move, haul or dig material such as soil, gravel, rocks etcetera.

In connection with transportation of heavy loads, e.g. in contracting work, dump vehicles of the type of articulated haulers (also called frame-steered vehicles or dumpers) are frequently used. Such vehicles may be operated with large and heavy loads in areas where there are no roads, for example for transports in connection with road or tunnel building, sand pits, mines and similar environments.

A dump vehicle comprises a forward vehicle section (a so-called engine unit) which in turn comprises a forward frame, an engine, a cab, and a forward wheel axle supported by the frame. The dump vehicle further comprises a rear vehicle section (a so-called load-carrying unit) which in turn comprises a rear frame, a tiltably arranged container for carrying loads, and one or two rear wheel axles supported by the frame. The container is often known as a receptacle, dump body, or the like.

The frame of the engine unit is connected to the frame of the load-carrying unit by means of a special articulation joint allowing the engine unit and the load-carrying unit to pivot in relation to each other about an imaginary axis extending in the longitudinal direction of the vehicle. Thanks to the articulation joint, the engine unit and the load-carrying unit are allowed to move substantially independently of each other.

Recent advancements in electrification and autonomous vehicles provide the opportunity to reduce the complexity of working machines, and hauler vehicles in particular. Such changes in the design necessitate and provide the opportunity to improve numerous features. One example is the frame, or frames in the case of an articulated hauler. The frame carries a heavy load. This means that the frame is typically made of steel and the parts of the frame need to be welded together in order to provide sufficient durability. It is a general desire to be able to use high tensile steel and other manufacturing methods for the frame of a working machine, and in particular a hauler vehicle.

### SUMMARY

At least one object of the invention is to provide a working machine being constructed such that the frame of the working machine is subjected to low stress. Another object of the invention is to provide a working machine with a lighter frame which aims to at least partly alleviate or improve issues such as the ratio of load weight compared to the weight of the machine, power consumption during operation.

According to a first aspect of the inventive concept, the object is achieved by a working machine for carrying a load according to claim 1. The working machine for carrying a load comprising:
- a dump body having an open load receiving area outwardly delimited by a load receiving area circumference, a load dumping end portion comprising attachment means for pivotably attaching the dump body to the working machine, and a load supporting end portion arranged at a distance from said load dumping end portion;
- a working machine frame having a longitudinal direction and a first end portion towards a first longitudinal end, the first end portion comprising attachment means pivotably attaching the load dumping end portion of the dump body to the working machine frame such that the dump body can be pivoted in relation to the working machine frame, and second end portion towards a second longitudinal end opposite the first longitudinal end, the second end portion being arranged to support the load supporting end portion of the dump body, the second end portion comprising a dump body receiving section;
- a first propulsion axle connected to the first end portion of the working machine frame, and a second propulsion axle connected to the second end portion of the working machine frame;
- wherein the first propulsion axle is arranged less than 15 % of the length of the working machine frame away from the attachment means, and the second propulsion axle is arranged less than 15 % of the length of the working machine frame away from the dump body receiving section.

By the provision of a short path load, such as less than 15% of the length of the working machine frame, from the attachment means and dump body receiving section to the first and second propulsion axles, respectively, the stress through the working machine frame is reduced. Thereby, the working machine frame can be made from less material and/or other materials. This brings down the weight of the vehicle, which leads both to improved fuel economy as well as the possibility to carry more load.

The length of the working machine frame should be interpreted as the total length of the working machine frame, such as e.g. the total length in the longitudinal direction of the working machine. The working machine frame may comprise longitudinal beams such as U-beams, H-beams or T-Beam which are connected transverse to the lengthwise direction via brackets. In some embodiments, the total length of the working machine frame may be in the range of 2 m to 8 m. In some embodiments, the total length of the working machine frame may be in the range of 3 m to 7 m. In some embodiments, the total length of the working machine frame may be in the range of 4 m to 6 m.

That the first and second propulsion axle are arranged less than 15% of the length of the working machine frame away from the attachment means thus means that the along the longitudinal direction, i.e. the length of the vehicle, the first propulsion axle may be offset compared to the attachment means, which are understood to hold a portion of the weight of the dump body, during use. Likewise, the second propulsion axle may be offset up to 15 % of the length of the working machine frame from the dump body receiving section which is configured to support a portion of the weight of the dump body during use of the working machine.

According to one embodiment, said working machine comprises solely two propulsion axles, that is the first propulsion axle and the second propulsion axle.

According to one embodiment, the dump body receiving section is a first dump body receiving section, and the working machine frame comprises at least a second dump body receiving section. In such embodiments, the second propulsion axle is arranged less than 15 % of the length of the working machine frame away from at least one of the first and second dump body receiving sections.

According to one embodiment, the working machine may be divided into several equally sized geometrical segments in the longitudinal direction, i.e. each one of the geometrical segments having an extension in the longitudinal direction, being e.g. the same as the extension of one of the propulsion axles in the longitudinal direction. Thus, according to such embodiments, the first propulsion axle may be arranged in the same, or neighbouring, geometrical segment as the attachment means, and the second propulsion axle may be arranged in the same, or neighbouring, geometrical segment as the dump body receiving section.
The first and second end portion may be understood as making up 20% of the length of the working machine frame as measured from the respective ends of the working machine frame.

According to one exemplary embodiment, the first propulsion axle is arranged less than 5% of the length of the working machine frame away from the attachment means. A reduced distance leads to an even further reduced stress in the working machine frame.

According to one exemplary embodiment, the second propulsion axle is arranged less than 5% of the length of working machine frame away from the dump body receiving section, preferably less than 2%. A reduced distance leads to an even further reduced stress in the working machine frame.

According to one exemplary embodiment, the second propulsion axle is arranged centred below the dump body receiving section. By having the second propulsion axle centred below the dump body receiving section, a minimal stress is induced on the working machine frame by the weight of the dump body during use.

According to one exemplary embodiment, the working machine frame is a bolted working machine frame. The low stress on the working machine frame enables the use of an, for example, bolted working machine frame typically used e.g. for trucks and buses. This facilitates manufacturing and production of the components and the working machine in general. Moreover, maintenance such as replacement of worn or damaged parts becomes possible and can be performed quicker compared to e.g. the typical welded working machine frame of an articulated hauler.

According to one exemplary embodiment, the connection between working machine frame and the second propulsion axle is arranged along a load bearing axis from the dump body, to the dump body receiving section, through a suspension arranged between the working machine frame and the second axle.

According to a second aspect of the inventive concept, the object is achieved by a working machine for carrying a load according to claim 7. The working machine for carrying a load comprising:
- a dump body having an open load receiving area outwardly delimited by a load receiving area circumference, a load dumping end portion comprising attachment means for pivotably attaching the dump body to the working machine, and a load supporting end portion arranged at a distance from said load dumping end portion;
   - a working machine frame having a longitudinal direction and a first end portion towards a first longitudinal end, the first end portion comprising attachment means pivotably attaching the load dumping end portion of the dump body to the working machine frame such that the dump body can be pivoted in relation to the working machine frame, and second longitudinal end portion towards a second longitudinal end opposite the first end longitudinal end, the second end portion being arranged to support the load supporting end portion of the dump body, the second end portion comprising a dump body receiving section;
   - a first propulsion axle connected to the first end portion of the working machine frame, and a second propulsion axle connected to the second end portion of the working machine frame;
   - wherein the attachment means comprises a first bracket, and wherein the dump body receiving section comprises second bracket, the attachment means are connected to the first propulsion axle via the first bracket and the dump body receiving section is connected to the second propulsion axle via the second bracket such that the weight of the dump body is transferred via the first and second bracket to the first and second propulsion axle respectively.

The second aspect of the inventive concept is understood to provide the same advantages as the first aspect, i.e. providing a short path load, from the attachment means and dump body receiving section to the propulsion axles, the stress through the working machine frame is reduced. Thereby, the working machine frame can be made from less material and/or other materials. This brings down the weight of the vehicle, which leads both to improved fuel economy as well as the possibility to carry more load.

The brackets should be understood to be short in comparison to the lengthwise extension of the working machine frame. In one embodiment, the length of the first and second bracket may be less than 15% of the length of the working machine frame. In another embodiment, the length of the first and second bracket may be less than 10% of the length of the working machine frame. In another embodiment the length of the first and second bracket may be less than 8% of the length of the working machine frame. In another embodiment the length of the first and second bracket may be less than 5% of the length of the working machine frame.

According to one exemplary embodiment, the working machine further comprises a first suspension arrangement attaching the first bracket and first propulsion axle to each other and a second suspension arrangement attaching the second bracket and the propulsion second axle to each other.

According to one exemplary embodiment, the working machine frame is a bolted working machine frame and the first and second brackets are bolted to the working machine frame.

The working machine according to the first and second aspect of the invention may be a autonomous, and electric or hybrid, working machine. The working machine may comprise electric motors arranged directly on the propulsion axles.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a perspective view of a working machine according to one embodiment of the invention.
Fig. 2 is a side view of a working machine according to one embodiment of the invention.
Fig. 3 is a front view of a working machine according to one embodiment of the invention.
Fig. 4 is a side view of an articulated hauler comprised in the state of the art.
Fig. 5 is a side view of a hauler according to at least one embodiment of the invention.
Fig. 6 is a perspective view of a hauler according to at least one embodiment of the invention.

### DETAILED DESCRIPTION OF EXAMPLE EMBODIMENTS OF THE INVENTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

In the following, a working machine 1 is described. The inventive concept is applicable on any working machines within the fields of industrial construction machines or construction equipment, in particular dumpers/haulers. Although the invention will be described with respect to a hauler, the invention is not restricted to this particular machine, but may also be used in other working machines such as articulated haulers, excavators, backhoe loaders and wheel loaders.

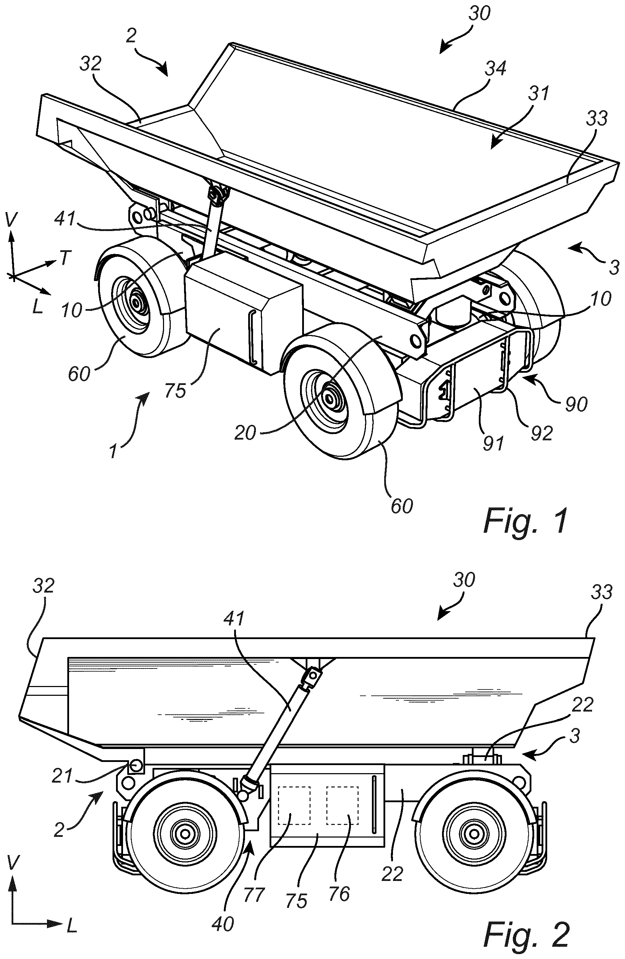

As seen in fig. 1 the working machine comprises a dump body 30 for accommodating a load. Merely as an example, and as is indicated in Fig. 1, the dump body 30 may be a loading platform of the working machine 1. The working machine 1 is adapted to have a load receiving condition in which the dump body 30 comprises an open load receiving area 31 outwardly delimited by a load receiving area circumference 34. In fig. 1 an embodiment is shown where the working machine 1 is adapted to assume the load receiving condition in a normal state. In other words, the working machine 1 embodiment illustrated in Fig. 1 comprises a dump body 30 which always comprises an open load receiving area 31 outwardly delimited by a load receiving area circumference 34. However, it is also envisioned that embodiments of the working machine may comprise cover means (not shown), such as a lid, that is adapted to cover at least a portion of the dump body 30 and which cover means can be moved in order to obtain the open load receiving area 31 to thereby arrive at the open load receiving area 14. Generally, the open load receiving area 31 may be an area that is directly accessible from the environment surrounding the working machine 1. For instance, the open load receiving area 31 may be an area that is directly accessible from the above of the dump body 30.

The working machine does not have a driver seat, but is intended to be autonomously and/or remotely driven. The working machine 1 further comprises a load dumping side 2 and an opposite side which herein referred to as the opposite side 3. The opposite side 3 may be used as a front end side when the machine is driven in the direction that puts the opposite side 3 first. However, the working machine 1 may be drivable in any direction, i.e. it is bidirectional. Further, the dump body 30 comprise a load dumping end portion 32 arranged on the working machines load dumping side 2, and an opposite end portion 33 arranged on the working machines opposite side 3.

Further, still refereeing to fig. 1 the working machine 1 comprise a working machine frame 20 to which a pair of propulsion axles 10 are mounted. The working machine frame 20 further supports the dump body 30, and thereby carries the load of anything contained in the dump body 30 as well as the weight from the dump body itself. The propulsion axles 10 are equipped with a propulsion hub 14 (not shown in fig. 1) for driving propulsion means 60. In the figures the propulsion means 60 are illustrated as wheels, however, they may also be crawlers.

Further, an electrical engine 70 is installed onto the propulsion axle 10 being coupled to a drive shaft (not shown). The electrical engine 70 is mounted onto a front side of the propulsion axle's 10 elongated main body, said front side facing away from a centre of the working machine 1. The working machine may comprise one electrical engine 70 on each machine axle 10.

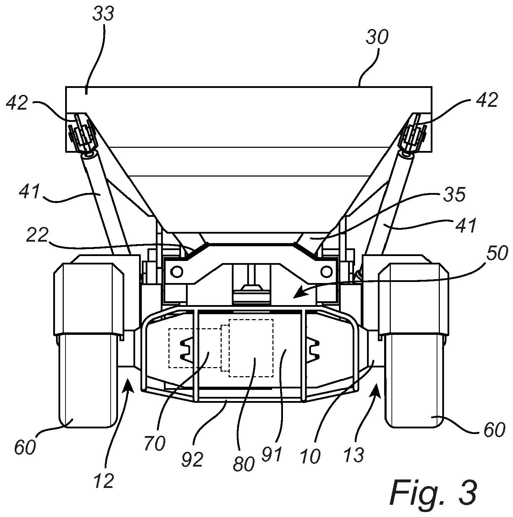

Further, the working machine 1 may comprise a tilting arrangement 40, such as a tilting arrangement comprising one or more tilting actuators 41, such as hydraulic actuators, for tilting the dump body 30 of the working machine 1. The tilting arrangement 40 is in one end attached to the frame 20 and in the other end to the dump body 30. Preferably, the tilting arrangement 40 comprise two tilting actuators 41 arranged at different sides of the dump body to ensure a stable tilting (as shown in fig 3).

Figure 1 finally disclose an electrical control arrangement 75, arranged to the frame of the working machine 1. The electrical control arrangement 75 may comprise (as illustrated in fig 2) a power source 76 e.g. a battery arrangement, for supporting the electrical engine(s) 70 and any other components with power. Further, the electrical control arrangement 75 may comprise a control unit 77 for controlling the working machine. The control unit 77 may be capable of receiving a remote control signal to enable the working machine to be remotely controlled. Such a signal may be received from an external transmission unit (not shown). It may further be capable of communicating any information to or from the working machine from or to a remote server (not shown). Such information may comprise usage data, service information, battery status, load, weight, capacity utilization or any other relevant information.

The load receiving area circumference 34 may form a closed loop that fully encloses a continuously open load receiving area 31. However, some embodiments of the working machine 1 may comprise one or more internal partitioning walls partitioning the open load receiving area 31 into two or more compartments (not shown).

The propulsion axle arrangement 10 also comprises a cover arrangement 90 for covering the electrical engine, wherein the cover arrangement comprises a first (inner) cover 91 and a second cover 92 being arranged on the outside of the first cover.

Turning to fig. 2, being the side view of the same embodiment of the vehicle, the working machine frame 20 is clearly illustrated as being coupled the propulsions means 60, i.e. the wheels, (via the propulsion axle, which is not seen in this view). Further, the illustration shows that the dump body 30 rests on the working machine frame 20. However, in the illustrated embodiment it is not in contact with the frame 20 during its whole length, but rather at the load dumping side 2 at an attachment means 21 being a pivotal arrangement allowing the dump body 30 to pivot relative the frame 20. The dump body 30 further rests on the frame 20 at a guiding plate portion 22, which will be further described in relation to fig 3. Further, the tilting arrangement 40, with one of the side's tilting actuators 41 is clearly sown in fig. 2. The tilting actuator 41 is in one end attached to the frame 20 and in the other end to the dump body 30. Further, the tilting actuator may be extended so that the dump body's opposite end portion 33 is elevated. Preferably, the tilting arrangement 40 comprise two tilting actuators 41 arranged at different sides of the dump body to ensure a stable tilting, and to spread the load on two actuators enabling a lower dimension of the tilting actuators for the same load.

As is also clearly shown in fig. 1 and 2, the working machine 1 extends in at least a longitudinal direction L, a vertical direction V and a transversal direction T. The longitudinal direction L is parallel to an intended direction of travel of the working machine 1. Further the transversal direction T is perpendicular to each one of the vertical direction V and the longitudinal direction L. That is, the transversal direction T is parallel to the general extension of the propulsion axles 10. These directions are intended to be interpreted relative the working machine, and should not be interpreted as being dependent of the vehicle's orientation.

Further, the electrical control arrangement 75 is illustrated in the side view of fig. 2. The placement of the electrical control arrangement 75 should only be considered to be an example. It is preferably arranged between the two working machine axles 10 and coupled to the frame 20, but the exact placement may be chosen in so that it is functionally placed in the environment which the working machine is to be used. Having the electrical control arrangement 75 on the outside of the frame, so that it is accessible from the side of the vehicle gives that advantage that both maintenance is facilitated and that any transceiving unit in the control arrangement, sending and/or receiving information may obtain a better signal and/or range. However, it would be possible to place the electrical control arrangement 75 transversally central on the working machine, i.e. under the dump body 30.

The dump body 30 of the working machine may further be designed so that the working machine 1 can assume a position relative to a second working machine of the same type, in which position the dump bodies at least partly overlap in at least the longitudinal or transversal direction. Generally, overlap of the dump bodies may be obtained on any side of the working machines 1. For instance, the overlap may be obtained along the longitudinal sides or the transversal sides of the working machines 1. For example, the above overlap may be at least 2%, preferably at least 5%, more preferred at least 8% of the load receiving length of the open load receiving area 31 in said longitudinal direction L.

Further, in figure 3 the working machine is shown in a front view, in one embodiment of the invention. In the front view, the working machine 1 is illustrated from one of the transversal sides, and more specifically from the side called the opposite side 3, being the side opposite of the load dumping side 2. The frame 20 is coupled to the propulsion axle 10, via the suspension arrangement 50 allowing the frame 20 to move relative the propulsion axle 10 in the vertical plane. Further, the propulsion axle comprises two opposing end portions 12, 13 each having a propulsion hub (not shown) coupled the propulsions means 60, i.e. the wheels in this embodiment. Further, the dump body 30 rests on the working machine frame 20 at a guiding plate portion 22. The dump body 30 comprise a load supporting end portion 35, which cooperates with a guiding plate portion 22 and works as a guiding means for guiding the dump body towards a transversally centred position during a pivotal downward movement of the dump body relative the frame. The formation of these guiding plate portions and load supporting end portions may be formed with an angle to a horizontal plane, i.e. with a vertical inclination. Further, the tilting arrangement 40 is clearly shown having two tilting actuators 41 arranged on each longitudinal side of the dump body. The tilting actuators 41 are attached to the dump body 30 at its top portion in a rotational coupling 42. Further, the tilting actuator may be extended so that the dump body's opposite end portion 33 is inclined. Finally, fig. 3 illustrates that the propulsion axle is equipped with an electrical engine 70 being drivably coupled to a drive shaft inside the propulsion axle (thus not shown) and mounted onto the illustrated front side 16 of the elongated main body 11, said front side 16 facing away from a centre of the working machine 1 in the transversal direction. This is further illustrated in the subsequent figures. In figures 1-3 the electrical engine 70 and gear box 80 are hidden by the engine cover 90, and is thus only noted with a dashed line in fig 3.

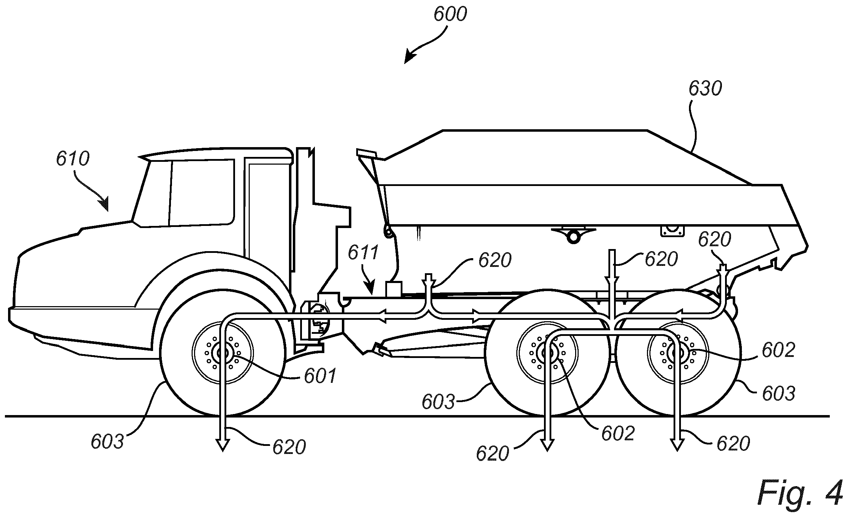

Figure 4 shows a state of the art articulated hauler 600. The articulated hauler 600 will be briefly discussed for the sake of brevity, and it is mainly shown in order to see the stress transfer, indicated by the arrow(s) 620 through the front frame 610 and back frame 611 of the articulated hauler 600. The articulated hauler comprises a front frame 610 and a back frame 611. The front frame has a front propulsion axle 601, and the back frame has a bogie upon which two propulsion axles 602 are mounted. Each propulsion axles are provided with propulsion means, in this case wheels 603. The power is generated by an engine mounted in the front frame and transferred through the articulated joint between the front frame and the back frame via a shaft. The front frame and back frame can pivot relative each other and thus steer the articulated hauler 600. A dump body 630 is mounted on the back frame for carrying a load.

Now turning to the stresses induced by then load from the dump body 630 during use of the articulated hauler 600, as can be seen by the arrow 620 the load is transferred at three main points from the dump body 630 to the back frame 611. Going from back to front on the articulated hauler 600, a first load point is the pivot joint at the back of the vehicle, a second load point is above the boogie axle, between the two propulsion axles 602 on the back frame 611 where the dump body 630 is supported by rubber plates, and a third load point is located at the front of the dump body 630. The load from the dump body 630 is then transferred through the back frame 611 to the boogie and the front frame 610 where is it finally transferred to the ground through the wheels 603. In the articulated hauler 600 shown in figure 4, the distance between the pivot joint and the connection to the boogie, between the two propulsion axles 602 on the back frame, may be approximately a third of the length of the back frame 611. Further, the load from the dump body 630 is unevenly distributed on the three load points. This means that the load from the dump body 630 induced stresses in the back frame 611, in particular stresses which induce bending of the back frame 611.

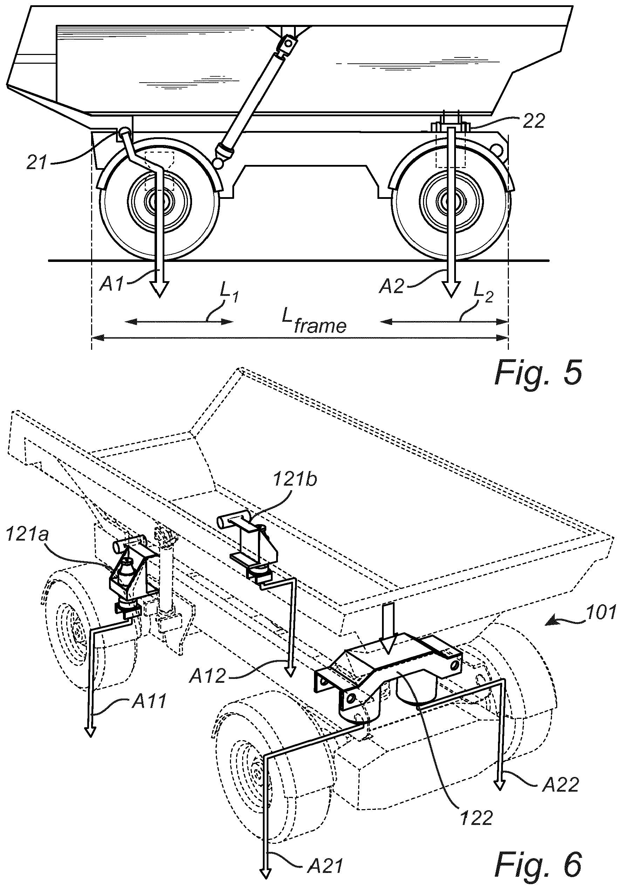

Turning to figure 5, which again shows the working machine 1 according to one embodiment of the present invention. Figure 5 is used to show the load transfer path from the dump body 30 to the wheels 60 of the working machine 1. Arrow A1 shows the load transfer path from the attachment means 21, to which the dump body is pivotably attached, to the ground via a propulsion axle 10. Arrow A2 shows the load transfer path from the dump body receiving section 22, here embodied as the guiding plate portion 22, onto which the dump body 30 rests while not being pivoted to dump a load, to the ground via another propulsion axle 10.

In order to reduce the stress on the working machine frame 20 the propulsion axles 10 should be mounted less than 15% of the total length of the working machine frame away from the attachment means 21 and from the guiding plate portion 22. This should be understood to relate to the mounting of the propulsion axles in the longitudinal direction L an length of the working machine frame L_{frame}. The distance from which the propulsion axles may be mounted from the attachment means 21 and guiding plate portion 22 is shown as double arrows L1 and L2 respectively. For a concrete example, if the total length of the working machine frame is 4 meters, the propulsion axles should not be mounted further away from the attachment means 21 than 60 centimetres, and the other propulsion axle no more than 60 centimetres from the guiding plate portion 22. Stated differently, L1 and L2 are 15 % of the L_{frame} as illustrated in figure 4. The propulsion axles 10 may of course be mounted closer to the attachment means 21 and the guiding plate portion 22. For example, a propulsion axle 10 may be centred below the guiding plate portion 22 to reduce the length of the load transfer path as shown in figure 4. Thereby, a minimal amount of stress, such as a bending moment is induced along the longitudinal direction of the working machine frame 20.

The working machine frame 20 may be a bolted frame made from high tensile steel. The working machine frame 20 may comprise a longitudinal beam, typically two longitudinal beams are used although only one, or more than two are also within the scope of the invention. A longitudinal beam may be a U-beam, a H-beam or T-beam. Other shapes are of course possible as well.

In other exemplary embodiments, not explicitly shown for the sake of brevity, the propulsion axle may of course be located as close as within 10% or 5% or 2% of the total length of the working machine frame as seen in the longitudinal direction L of the working machine 1. Stated differently, L1 and L2 may be 10% or 5% or 2% of the L_{frame} as illustrated in figure 4. In other embodiments, also not shown for the sake of brevity, a propulsion axle 10 may be centred below the guiding plate portion 22 and another propulsion axles 10 mounted within 8% of the length of the working machine frame 20 as seen in the longitudinal direction L of the working machine 1.

Figure 6 shows another embodiment of the invention in which a working machine 101, which is for all intents and purposes similar to the working machine 1 except for the components and features mentioned below. In the working machine 101 the attachment means 21 on the working machine frame 20 comprises a first bracket which comprises a first subpart 121 a and a second subpart 121 b. The subparts 121 a and 121 b are attached to the working machine frame 20. The dump body receiving section of the working machine frame 20, i.e. the guiding plate portion 22, comprises a second bracket 122 which is attached to the working machine frame 20. The second bracket 122 may extend between two longitudinal beams of the working machine frame 20 and be attached by e.g. bolts to the longitudinal beams.

It should of course be noted that although the first bracket is shown as two sub parts 121 a and 121 b herein, the first bracket may equally well be a single part, similar to the second bracket 122, which would extend and be attached e.g. to two longitudinal beams of the working machine frame 20. The functions of such a single part first bracket would be the same as the one explained in the following.

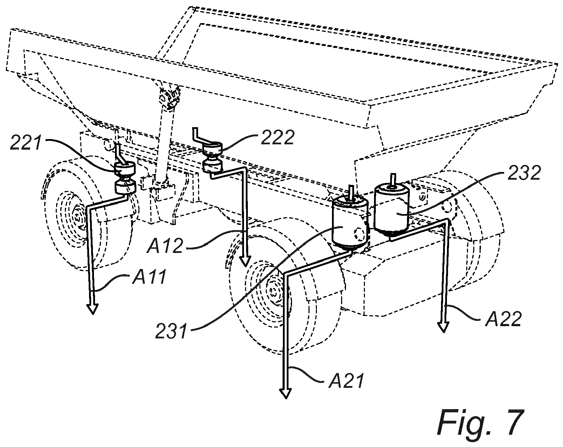

The dump body 30, and thus the load from the dump body 30, is connected to a propulsion axle via the sub parts 121 a and 121 b of the first bracket 121 and the dump body receiving section is connected to a propulsion axle via the second bracket 122 such that the weight of the dump body 30 is transferred via the first and second bracket to the propulsion axles. This is illustrated by the arrows A11 and A12. As the attachments means 21 are included in the sub parts 121 a and 121 b, the load is transferred directly through the sub parts 121 a and 121 b to the propulsion axle via a suspension arrangement (see figure 7). Thereby, there is no load or stress induced on the working machine frame. Likewise, as the load the load from the dump body 30 is transferred directly via the second bracket 122 to a propulsion axle via a suspension arrangement. This is illustrated by the arrows A21 and A22 in figure 6. Hence, by provision of specific components transferring the load from the dump body 30 directly to the propulsion axle 10 via suspension arrangements, stress inducement in the working machine frame 20 is in principle avoided.

The second bracket 122 may comprise, as shown in figure 6, a central portion which is flat and two sloped portions surrounding the central portion. The sloped portions may also comprise a rubber plate or the like. The slope of the sloped portions relative the flat portion may be in the range of 15 degrees to 45 degrees. The sloped portions may be complimentary shaped with respect to a guide portion (not illustrated) on the dump body 30 such that the sloped portions and the guide portion on the dump body cooperate to guide the dump body 30 during a pivotal downwards movement towards the frame into a centred positions with respect to the working machine frame 20. Hence, the sloped portions may, together with the flat central portion, receive at large portion of the weight of the dump body 30.

Figure 7 further shows the load path from the dump body 30 to the ground via components of the working machine 1, 101. In more detail, the suspension arrangement 221,222, 231, 232 of the working machine 1,101 is shown. As can be seen by the arrows A11, A12, A21, A22 in figure 7, the load is directly connected via the first bracket 121 and the second bracket 122 into the suspension which transfers the load to the propulsion axles. In particular the, the suspension component 221 is attached to the subpart 121 a and the suspension component 221 is attached to the subpart 121 b. As the attachment means may be integrally formed in the sub parts 121 a, 121 b the load will be directly transferred through the subparts 121 a, 121 b and onwards through the suspension components 221, 222 to the propulsion axle. Likewise, the suspension components 223, 224 are attached to the second bracket 122 and the load, when the dump body 30 rests on the second bracket 122, is directly transferred through the second bracket 122 through the suspension components 231, 232 to a propulsion axle. This is further advantageous as there is in principle no stress, or bending moment, induced on the frame as the only components between the dump body and the propulsion axles are the first and second bracket 121,122 and the suspension arrangement.

According to one embodiment suspension components 221, 222 associated with the first bracket 121 comprises each at least one projection arm extending from the propulsion axle 10 towards the working machine frame 20, and a respective suspension cushion arranged between the respective projection arm and the working machine frame. The suspension cushion is configured to suspensionally take up a load. According to one embodiment suspension components 231, 232 associated with the second bracket 122 comprises a first suspension device 231 and a second suspension device 232 arranged on opposite sides of the center of the elongated main body, each one of said first and second suspension devices 231, 232 holds a suspension fluid. The first and the second suspension devices 231, 232 may e.g. comprise a respective air bellow.

It is to be understood that the present invention is not limited to the embodiments described above and illustrated in the drawings; rather, the skilled person will recognize that many changes and modifications may be made within the scope of the appended claims.

## Claims

1. A working machine for carrying a load comprising:
- a dump body having an open load receiving area outwardly delimited by a load receiving area circumference, a load dumping end portion comprising attachment means for pivotably attaching the dump body to the working machine, and a load supporting end portion arranged at a distance from said load dumping end portion;
- a working machine frame having a longitudinal direction and a first end portion towards a first longitudinal end, the first end portion comprising said attachment means pivotably attaching the load dumping end portion of the dump body to the working machine frame such that the dump body can be pivoted in relation to the working machine frame, and a second end portion towards a second longitudinal end opposite the first longitudinal end, the second end portion being arranged to support the load supporting end portion of the dump body, the second end portion comprising a dump body receiving section;
- a first propulsion axle connected to the first end portion of the working machine frame, and a second propulsion axle connected to the second end portion of the working machine frame;
- wherein the first propulsion axle is arranged less than 15 % of the longitudinal length of the working machine frame away from the attachment means, and the second propulsion axle is arranged less than 15 % of the length of the working machine frame away from the dump body receiving section.

2. A working machine according to claim 1, wherein the first propulsion axle is arranged less than 5% of the length of the working machine frame away from the attachment means.

3. A working machine according to claim 1 or 2, wherein the second propulsion axle is arranged less than 5% of the length of working machine frame away from the dump body receiving section, preferably less than 2%.

4. A working machine according to any one of the preceding claims, wherein the second propulsion axle is arranged centred below the dump body receiving section.

5. A working machine according to any one of the preceding claims, wherein the working machine frame is a bolted working machine frame.

6. A working machine according to any one of the preceding claims, wherein the connection between working machine frame and the second propulsion axle is arranged along a load bearing axis from the dump body, to the dump body receiving section, through a suspension arranged between the working machine frame and the second axle.

7. A working machine for carrying a load comprising:
- a dump body having an open load receiving area outwardly delimited by a load receiving area circumference, a load dumping end portion comprising attachment means for pivotably attaching the dump body to the working machine, and a load supporting end portion arranged at a distance from said load dumping end portion;
- a working machine frame having a longitudinal direction and a first end portion towards a first longitudinal end, the first end portion comprising attachment means pivotably attaching the load dumping end portion of the dump body to the working machine frame such that the dump body can be pivoted in relation to the working machine frame, and a second end portion towards a second longitudinal end opposite the first longitudinal end, the second end portion being arranged to support the load supporting end portion of the dump body, the second end portion comprising a dump body receiving section;
- a first propulsion axle connected to the first end portion of the working machine frame, and a second propulsion axle connected to the second end portion of the working machine frame;
- wherein the attachment means comprises a first bracket, and wherein the dump body receiving section comprises second bracket, the attachment means are connected to the first propulsion axle via the first bracket and the dump body receiving section is connected to the second propulsion axle via the second bracket such that the weight of the dump body is transferred via the first and second brackets to the first and second propulsion axles, respectively.

8. A working machine according to claim 7, further comprising a first suspension arrangement attaching the first bracket and first propulsion axle to each other and a second suspension arrangement attaching the second bracket and the second propulsion axle to each other.

9. A working machine for carrying a load according to claim 7, wherein the working machine frame is a bolted working machine frame and the first and second brackets are bolted to the working machine frame.
